# EUROPÄISCHE PATENTSCHRIFT

(11) **EP 1 601 520 B1**
(45) Veröffentlichungstag und Bekanntmachung des Hinweises auf die Patenterteilung: **15.09.2010**
(21) Anmeldenummer: 04717073.3
(22) Anmeldetag: 04.03.2004
(51) Int. Cl.: B29C 67/24, B29C 31/06, B29C 70/68

(54) **VERFAHREN ZUR HERSTELLUNG VON BAUTEILEN MIT EINER KOMPAKTEN POLYURETHAN(PUR)-VERSIEGELUNGSSCHICHT**
METHOD FOR PRODUCING PARTS HAVING A COMPACT POLYURETHANE (PUR) SEALING LAYER
PROCEDE DE PRODUCTION DE PIECES PRESENTANT UNE COUCHE DE REVETEMENT POLYURETHANE (PUR) COMPACTE

(30) Priorität: 05.03.2003 DE 10309814
(43) Veröffentlichungstag der Anmeldung: 07.12.2005
(73) Patentinhaber: KraussMaffei Technologies GmbH, 80997 München (DE)
(72) Erfinder: RENKL, Josef, 85229 Markt Indersdorf (DE); SONNTAG, Thomas, 80797 München (DE)
(74) Vertreter: Zollner, Richard
(86) Internationale Anmeldenummer: PCT/EP2004/002156
(87) Internationale Veröffentlichungsnummer: WO 2004/078464

(56) Entgegenhaltungen:
- EP-A- 0 084 672
- EP-A- 0 141 531
- EP-A- 1 207 031
- WO-A-99/07578
- DE-A- 3 521 948
- DE-A- 3 803 595
- DE-A- 10 020 157
- US-A- 5 008 062
- US-A- 5 174 933
- US-A- 5 874 037
- US-A- 6 143 214
- PATENT ABSTRACTS OF JAPAN Bd. 0124, Nr. 84 (M-776), 16. Dezember 1988 (1988-12-16) & JP 63 203309 A (INOUE MTP CO LTD), 23. August 1988 (1988-08-23)
- PATENT ABSTRACTS OF JAPAN Bd. 0111, Nr. 88 (M-599), 17. Juni 1987 (1987-06-17) & JP 62 016110 A (ACHILLES CORP), 24. Januar 1987 (1987-01-24)

## Beschreibung

Die Erfindung betrifft ein Verfahren gemäß dem Oberbegriff von Patentanspruch 1 zur Herstellung von Bauteilen mit einer kompakten Polyurethan(PUR)-Versiegelungsschicht und eine Vorrichtung dafür.

Bevorzugtes Anwendungsgebiet ist die Herstellung von PUR-versiegelten Furnierverbundteilen im Klargießverfahren.

Dekorformteile im Fahrzeuginnen- sowie im Außenbereich, Tabletts und Schalen für medizinische Anwendungen sowie Möbelkomponenten und Designelemente erfordern eine lichtechte und kratzfeste Versiegelung der Oberfläche. Es ist bekannt, Dekorteile aus Holz, Aluminium oder Carbonfaser aufwändig vorzubehandeln und bis zur zehnmal mit ungesättigtem Polyesterlack zu überziehen, bis sie die geforderte Lackdicke aufweisen. Nach jedem Lackiervorgang erfolgt ein Zwischengelieren von etwa zwanzig Minuten bei Raumtemperatur. Die Aushärtezeit der Polyesterlackschicht liegt in der Regel zwischen 48 und 72 Stunden. Zum Abschluss muss die oberste Lackschicht noch plan geschliffen werden. Eine solche Beschichtung mit einem Lack kann beispielsweise mit Sprühvorrichtungen vorgenommen werden, wie sie in der DE 197 53 602 A1 als Stand der Technik genannt werden oder mit einer verbesserten Sprühvorrichtung gemäß dem Anmeldungsgegenstand der DE 197 53 602 A1 selbst.

Nachteilig an diesen Sprühtechniken ist, dass Lackschlammabfälle anfallen und Emissionen im Fahrzeuginnenraum auftreten. Weiterhin nachteilig ist der große Zeitaufwand bis zur Fertigstellung eines lackierten Erzeugnisses.

Zur Behebung dieser Nachteile ist das sogenannte CCM-Verfahren (Clear Coat Moulding) bekannt. Hierbei handelt sich um ein Verfahren zur Versiegelung von Oberflächen mit einem kompakten Polyurethan, wobei die Erkenntnis zugrundeliegt, dass aliphatisches Polyurethan lichtecht ist und sehr gut auf Holz, Metall sowie verschiedenen Geweben haftet. Außerdem ist aliphatisches Polyurethan sowohl in harter als auch in flexibler Ausführung verfügbar. Die Herstellung von PUR-versiegelten Erzeugnissen erfolgt dabei in einem einzigen Arbeitsgang, indem die zu versiegelnden bzw. zu beschichtenden Erzeugnisse in ein Formwerkzeug eingelegt werden, dessen Kavität die Dicke der Schicht berücksichtigt, indem nach dem Schließen der Form ein der Schichtdicke entsprechender Spalt frei bleibt. Dieser Spalt wird im Hochdruckverfahren mit einem Zweikomponenten-Polyurethan in einem Arbeitsgang ausgegossen. Der Beschichtungsprozess ist nach einer Reaktionszeit der Polyurethanschicht nach wenigen Minuten abgeschlossen und das beschichtete Erzeugnis kann dem Formwerkzeug entnommen werden. Eine Nachbearbeitung der Erzeugnisse im Bereich der PUR-Versiegelung bzw. der PUR-Beschichtung ist in der Regel nicht erforderlich.

Üblicherweise wird hierbei stets ein festes Volumen an PUR entsprechend der zu füllenden Kavität als Schussgewicht vorgegeben. In diesem Zusammenhang ist auf die beiden Dokumente WO 99/07578 und US 5,008,062 zu verweisen, bei denen eine bestimmte Menge an reaktivem Material zur Beschichtung oder Ummantelung eines in eine Form eingelegten Kernteils verwendet und in diese Form eingebracht wird.

Unberücksichtigt bleibt dabei, dass die zu beschichteten Erzeugnisse bzw. Bauteile, nachfolgend teilweise auch Einlegeteile genannt, einer Charge in sich unterschiedliche Volumina aufweisen können. Gerade bei Fumierverbundteilen treten Unterschiede schon in einer Charge aufgrund von Maßungenauigkeiten beim Schneiden der Furnierblätter sowie beim Verkleben mit dem Metallträger auf. Desweiteren ergeben sich Abweichungen im Volumen auch dadurch, dass gleichartige Einlegeteile unterschiedliche Furniere aufweisen, beispielsweise wenn für Holzdekore im Innenbereich eines Personenkraftwagens je nach Kundenwunsch unterschiedliche Hölzer zum Einsatz kommen (Wurzelholz, Birke, Fichte, usw.). Aufgrund dieser Maßungenauigkeiten bei den Einlegeteilen kommt es zu entsprechenden Schwankungen beim Volumen der zu befüllenden Kavität.

Wenn nun, wie üblich, pro Schuss ein festes Volumen an PUR vorgegeben wird, hat dies unterschiedliche negative Auswirkungen, je nachdem, ob zu viel oder zu wenig PUR in die Kavität injiziert wird.

Bei einer zu kleinen Kavität wird zuviel PUR injiziert und es kommt zu einem unerwünschten Druckanstieg in der Kavität mit der Folge, dass es zu einem Aufdrücken der Kavität und einem Überspritzen kommt. Dadurch wird mehr PUR verbraucht als eigentlich nötig; außerdem kommt es zu einer unerwünschten Gratbildung an dem Einlegeteil. Bei einer zu großen Kavität wird diese nicht vollständig gefüllt, d.h. es wird keine vollständige Beschichtung erzielt. Desweiteren kann der Innendruck nicht groß genug werden, um etwaige Bläschen sicher zum Zerplatzen zu bringen, so dass die Versiegelungsschicht Lufteinschlüsse aufweist.

Aus der US 6,143,214 ist eine Misch- und Austragsvorrichtung bekannt, bei der zwei reaktive Komponenten in einer Mischeinrichtung zugeführt und in einer Kammer innig miteinander vermischt werden. Am Ende der Kammer wird die Mischung aus- und einer Form zugeführt. Um eine funktionssichere Arbeitsweise zu ermöglichen, wird der Druck in der Mischkammer ermittelt, und bei Erreichen einer vorgegebenen Druckgrenze wird eine weitere Zufuhr der Mischung unterbrochen.

In der DE 38 03 595 ist ein Verfahren und eine Vorrichtung zur Werkzeugfüllung mit einem PUR-Material beschrieben, wobei in dem Werkzeug selbst ein oder mehrere Druckaufnehmer angeordnet sind. Wird im Werkzeug ein bestimmter Druck erreicht, so wird die Materialzufuhr zum Werkzeug abgeschaltet, um einen einheitlichen Füllgrad sicherzustellen. Im Angusskanal angeordnete Druckaufnehmer zur Steuerung der Mischkopfdosierung sind bekannt aus DE 3 521 948.

Der Erfindung liegt die Aufgabe zugrunde, ein Verfahren sowie eine Vorrichtung zum Herstellen von PUR-versiegelten Erzeugnissen anzugeben, welches oder welche unabhängig von Massungenauigkeiten der Einlegteile stets zu einer Versiegelung mit gleichbleibender Qualität führt und die oben genannten Nachteile vermeidet.

Die Lösung dieser Aufgabe erfolgt durch ein Verfahren mit den Merkmalen von Patentanspruch 1 sowie eine Vorrichtung mit den Merkmalen des Patentanspruchs 7. Vorteilhafte Weiterentwicklungen und Ausgestaltungen finden sich in den Unteransprüchen.

Die Komponentenzufuhr wird bei Erreichen eines vorgebbaren Abschaltdruckes in der Komponentenzufuhr abgeschaltet. In der Kavität wird von Schuss zu Schuss stets der gleiche Innendruck erreicht und das Schussvolumen passt sich den Schwankungen der Kavität an. Damit können nicht nur Fumierverbundbauteile mit Schwankungen in einer Charge problemlos mit einer qualitativ hochwertigen Versiegelungschicht überzogen werden, sondern es können auch von Schuss zu Schuss problemlos Furnierverbundteile beschichtet werden, die unterschiedliche Furniere aufweisen. Dadurch dass stets der gleiche Forminnendruck erreicht wird, wird außerdem sichergestellt, dass sämtliche eventuell auftretende Bläschen zerplatzen und somit Lufteinschlüsse vermieden werden.

Vorzugsweise wird der Druck einer der Komponenten am Mischkopf gemessen. Wenn das Mischungsverhältnis von Poiyoi zu isocynat ungleich 1:1 ist, wird vorzugsweise der Druck derjenigen Komponente gemessen, die den höheren Anteil an dem PUR-Gemisch aufweist, da der Druckanstieg zum Schussende bei dieser Komponente steiler verläuft und somit besser zu überwachen ist. Es ist aber auch möglich, bei der Komponente mit dem niedrigeren Anteil an dem PUR-Gemisch oder bei beiden Komponenten den Druck zu messen.

In einer weiteren Ausgestaltung ist vorgesehen, zusätzlich die Zeit nach dem Starten der PUR-Injektion zu messen, da bei Leckagen des Formwerkzeugs der Abschaltdruck in der Regel nicht oder nur sehr spät erreicht wird und somit unnötig lange PUR verschwendet werden würde. Wenn eine bestimmte Zeit verstrichen ist, wird die Komponentenzufuhr auch dann abgeschaltet, wenn der Abschaltdruck noch nicht erreicht sein sollte. In diesem Fall muss geprüft werden, wo gegebenenfalls eine Leckage vorhanden ist.

Nachfolgend soll die Erfindung anhand eines Ausführungsbeispiels und unter Bezugnahme auf die Figuren näher erläutert werden.

Es zeigen:
- Fig.1: Querschnitt durch ein Furnierverbundteil mit einer transparenten PUR-Schicht;
- Fig.2: Schematische Darstellung einer PUR-Hochdruckmaschine;
- Fig.3: Querschnitt durch ein Formwerkzeug mit angesetztem Mischkopf;
- Fig.4: Verlauf des Drucks Pᵢₛₜ einer Komponente am Mischkopf über die Zeit (Normal- betrieb);
- Fig.5: Verlauf des Drucks Pᵢₛₜ einer Komponente am Mischkopf bei einer Leckage im Formwerkzeug.

Die Erfindung soll anhand eines länglichen Einlegteils 1 beschrieben werden, das aus einem Metallträger 2 und einem Holzfurnier 3 besteht, auf dem mit dem erfindungsgemäßen Verfahren eine kompakte, nicht schäumende, PUR-Schicht 4 aufgebracht wird. Die Bestandteile Polyol und Isocyanat sind für sich genommen jeweils klar und transparant. Falls eine farbige (opake oder transparente) Versiegelungsschicht erwünscht ist, müssen geeignete Substanzen in einer oder beiden Komponenten zugegeben werden. Mittels Zugabe von Aktivatoren und Katalysatoren wird die Reaktionszeit für das Aushärten des kompakten PUR in geeigneter Weise eingestellt.

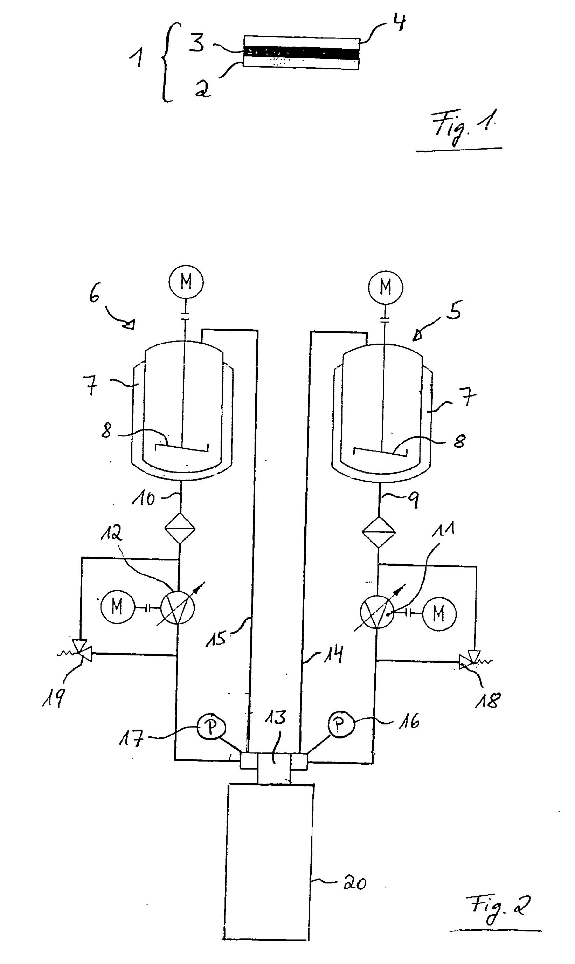

Wie der Figur 2 zu entnehmen ist, werden die Polyol- und die Isocyanat-Komponenten in an sich bekannter Weise in Arbeitsbehältern 5 und 6 bevorratet gehalten, die jeweils eine Isolationsschicht 7 und ein motorgetriebenes Rührwerk 8 aufweisen. Über Zuführleitungen 9 und 10 sowie motorgetriebene Dosieraggregate 11 und 12 werden die Komponenten einem Mischkopf 13 zugeleitet und - im Rezirkulationszustand des Mischkopfes - über Rückführleitungen 14 und 15 in den jeweiligen Arbeitsbehälter zurückgeleitet. Der Mischkopf 13 ist an ein Formwerkzeug 20 angeschlossen und verfügt über Druckaufnehmer 16 und 17 für die Polyol- und die Isocyanatkomponente. Desweiteren sind Sicherheitsventile 18 und 19 in den Komponentenkreisläufen vorgesehen.

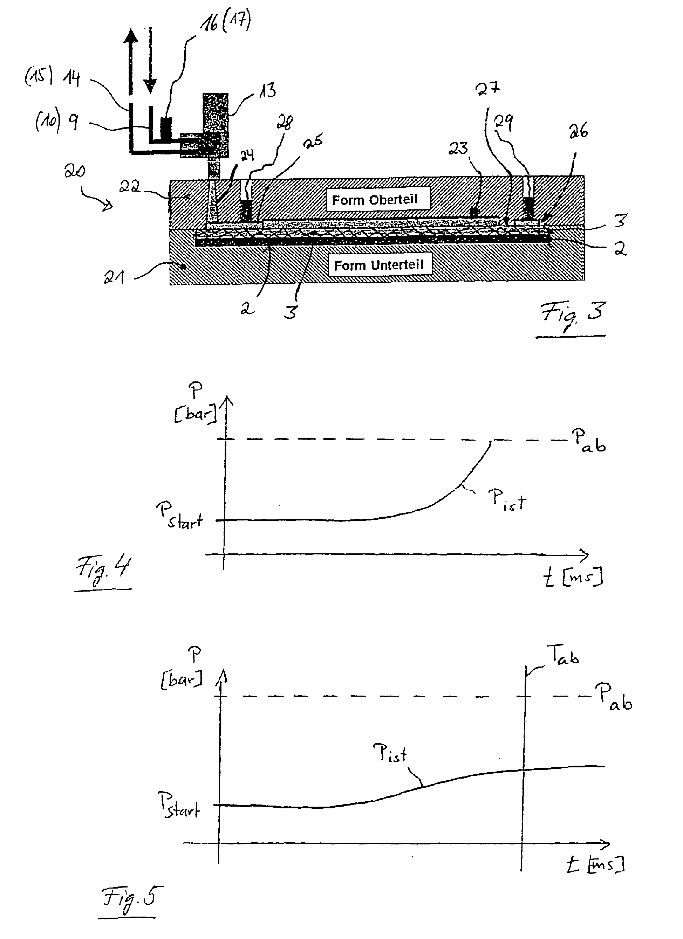

In der Figur 3 ist das Formwerkzeug 20, bestehend aus einer unteren Formhälfte 21 und einer oberen Formhälfte 22, im geschlossenen Zustand gezeigt. In der unteren Formhälfte 21 befindet sich das Einlegeteil aus dem Metallträger 2 und dem Holzfurnier 3. In der oberen Formhälfte 22 wird zwischen der Oberseite des Einlegeteils und der Forminnenwand eine Kavität 23 gebildet. Desweiteren sind in der oberen Formhälfte 22 auf der Seite des Mischkopfes Angusskanäle 24 und 25 und auf der dem Mischkopf abgewandten Seite der Kavität ein Überlaufraum 26 vorgesehen, der über eine Filmanbindung 27 mit der Kaviät 23 fließtechnisch verbunden ist. Am Mischkopf 13 ist ein Druckaufnehmer 16 (für die Polyol-Komponente) oder 17 (für die Isocyanatkomponente) vorgesehen. Im Bedarfsfalle können zusätzliche Druckaufnehmer 28 im Angusskanal und 29 im Überlaufraum vorgesehen werden.

Das erfindungsgemäße PUR-Klargieß-Verfahren läuft wie folgt ab (siehe auch Figur 4): Das Einlegeteil 1 wird in die untere Formhälfte 21 eingelegt und die obere Formhälfte 22 wird auf die untere Formhälfte 21 aufgesetzt, so dass das Formwerkzeug 20 geschlossen ist. Mit dem Start der PUR-Anlage wird mit den Dosieraggregaten 11 und 12 der Komponentendruck Pᵢₛₒ und P_{poly} hochgefahren, bis der gewünschte Mischdruck Pₛₜₐᵣₜ erreicht ist, der z.B. bei 150 bar liegen kann. Dieser gewünschte Mischdruck Pₛₜₐᵣₜ einer Komponente wird als Referenzwert in der Maschinensteuerung abgespeichert. Desweiteren ist in der Maschinensteuerung ein einstellbarer Abschaltdruckwert P_{ab} hinterlegt, dessen Wert von dem herzustellenden Bauteil abhängt. Dieser Wert kann zum Beispiel 15 bar über dem Referenzwert liegen. Jetzt öffnet der Mischkopf 13 und injiziert das PUR-Gemisch über die Angusskanäle 24 und 25 in die Kavität 23. Das Gemisch bewegt sich in der Kavität von dem Angussbereich 24, 25 zu dem gegenüberliegenden Ende und füllt dabei die Kavität 23. Zu Beginn des Füllvorgangs ist noch kein merklicher Druckanstieg in der Kavität 23 zu verzeichnen (Pᵢₛₜ im wesentlichen konstant). Mit zunehmendem Füllgrad steigt der Innendruck in der Kavität 23 und damit der Druck Pᵢₛₜ der beiden Komponenten am Mischkopf. Wenn der voreingestellte Abschaltdruck P_{ab} erreicht ist, wird die Komponentenzufuhr ab- und der Mischkopf 13 in den Rezirkulationszustand umgeschaltet. Nunmehr bleibt das Werkzeug 20 über eine Reaktionszeit geschlossen, bis das PUR ausgehärtet ist. Typische Werte liegen im Bereich von einigen Minuten und hängen letztendlich von der Größe des Einlegeteils und der Dicke der Versiegelungsschicht ab. Nach dem Aushärten wird das Formwerkzeug 20 geöffnet und das fertig versiegelte Fumierverbundteil kann entnommen werden. Anschließend kann mit dem nächsten Zyklus begonnen werden.

Anstelle der oder zusätzlich zur Messung des Komponentendrucks kann auch an anderen Positionen ein Druck gemessen werden, um einen Abschaltdruck P_{ab} zu ermitteln, beispielsweise mit dem Angussdruckaufnehmer 28 oder dem Überlaufdruckaufnehmer 29. Es ist auch möglich, zwischen dem Druck im Anguss und dem Druck im Überlauf einen Mittelwert zu bilden, der als Abschaltdruck ausgewertet wird.

Dadurch, dass immer der gleiche Forminnendruck in dem Formwerkzeug 20 erreicht wird, ist sichergestellt, dass - unabhängig von Schwankungen in der Kavität 23 - diese immer vollständig gefüllt wird und auf das Einlegeteil 1, insbesondere auf die Furnierschicht 3 stets der gleiche Druck ausgeübt wird. Damit wird ferner sichergestellt, dass eine qualitativ hochwertige Lackschicht erzeugt wird, die insbesondere frei von Lufteinschlüssen oder sonstigen Fehlstellen ist.

Wie der Figur 5 zu entnehmen ist, wird zusätzlich eine Zeit T_{ab} vorgegeben, nach deren Ablauf die Komponentenzufuhr auch dann abgeschaltet wird, wenn der vorgegebene Abschaltdruck P_{ab} noch nicht erreicht ist. Auf diese Weise wird vermieden, dass bei Leckagen, wenn der Druck Pᵢₛₜ nicht den Abschaltdruck P_{ab} erreicht, zuviel unnötiges PUR-Gemisch aus dem Formwerkzeug 20 austritt.

### Bezugszeichenliste

- 1: Einlegeteil
- 2: Metallträger
- 3: Holzfurnier
- 4: PUR-Schicht
- 5: Polyol-Arbeitsbehälter
- 6: Isocyanat-Arbeitsbehälter
- 7: Isolationsschicht
- 8: Rührwerk
- 9: Zuführleitung für Polyol-Komponente
- 10: Zuführleitung für Isocyanat-Komponente
- 11: Dosieraggregat für Polyol-Komponente
- 12: Dosieraggregat für Isocyanat-Komponente
- 13: Mischkopf
- 14: Rückleitung für Polyol-Komponente
- 15: Rückleitung für Isocyanat-Komponente
- 16: Druckaufnehmer für Polyol-Komponente
- 17: Druckaufnehmer für Isocyanat-Komponente
- 18: Sicherheitsventil im Polyol-Kreislauf
- 19: Sicherheitsventil im Isocyanat-Kreislauf
- 20: Formwerkzeug
- 21: Untere Formhälfte
- 22: Obere Formhälfte
- 23: Kavität
- 24: Vertikaler Angusskanal
- 25: Horizontaler Angusskanal
- 26: Überlaufraum
- 27: Filmanbindung
- 28: Druckaufnehmer im Angussbereich
- 29: Druckaufnehmer im Überlaufraum

## Patentansprüche

1. Verfahren zur Herstellung von Bauteilen mit einer kompakten Polyurethan-Versiegelungsschicht, wobei das Bauteil in ein Formwerkzeug (20) eingelegt wird, bei dem im geschlossenen Zustand zwischen der zu beschichtenden Oberfläche des Bauteils (1) und der dieser gegenüberliegenden Forminnenwand ein Spalt (23) vorhanden ist, wobei der Mischkopf zum Befüllen des Spaltes an das Formwerkzeug (20) angeschlossen wird und die Komponenten des kompakten Polyurethans über einen Mischkopf (13) und einen Angusskanal (24, 25) in das mit dem Bauteil (1) bestückte Formwerkzeug (20) injiziert werden,
**dadurch gekennzeichnet, dass**
ein von einem Kavitätsdruck abhängiger Druck Pᵢₛₜ in der Komponentenzufuhr zum Mischkopf (13), im Angusskanal zum Formwerkzeug oder in einem Überlaufraum (26) ermittelt wird, und
die Komponentenzufuhr beendet und der Mischkopf in einen Rezirkulationszustand umgeschaltet wird, wenn der ermittelte Druck Pᵢₛₜ einen vorgebbaren Druck P_{ab} erreicht hat.

2. Verfahren nach Anspruch 1,
**dadurch gekennzeichnet, dass**
bei der Messung in der Komponentenzufuhr der Druck von einer der Komponenten gemessen wird.

3. Verfahren nach Anspruch 1 oder 2,
**dadurch gekennzeichnet, dass**
bei einem Mischungsverhältnis von ungleich 1:1 der Druck derjenigen Komponente gemessen wird, die den höheren Anteil am Polyurethan-Gemisch besitzt.

4. Verfahren nach Anspruch 1,
**dadurch gekennzeichnet, dass**
bei der Messung in der Komponentenzufuhr der Druck von beiden Komponenten gemessen wird.

5. Verfahren nach einem der Ansprüche 1 bis 4,
**dadurch gekennzeichnet, dass**
der Druck zusätzlich sowohl im Angusskanal (24, 25) als auch im Überlaufraum (26) gemessen wird, dass ein Mittelwert dieser beiden Druckwerte gebildet wird und dass das Abschalten der Komponentenzufuhr bei Erreichen eines vorgegebenen Mittelwertes erfolgt.

6. Verfahren nach einem der Ansprüche 1 bis 5,
**dadurch gekennzeichnet, dass**
zusätzlich die Zeit t nach dem Starten der Gemischzufuhr gemessen wird und dass die Komponentenzufuhr abgeschaltet wird, wenn eine bestimmte, vorgebbare Zeit T_{ab} vergangen ist.

7. Vorrichtung zur Durchführung eines der in den Ansprüchen 1 bis 6 genannten Verfahrens zur Herstellung von Bauteilen mit einer kompakten Polyurethan-Versiegelungsschicht, umfassend einen Mischkopf (13) zum Erzeugen eines Polyurethangemisches, welches über einen Angusskanal (25, 25) in ein Formwerkzeug (20) einbringbar ist, und zwei Komponentenzuführungen (9, 10) zum Mischkopf (13), wobei
- der Mischkopf (13) zum Befüllen des Formwerkzeugs (20) an dieses anschließbar ist,
- in einem der oder in beiden Komponentenzuführungen (9, 10) oder im Angusskanal oder in einem Überlaufraum (26) des Formwerkzeugs ein Druckaufnehmer (16, 17) vorgesehen ist,
- in einer Maschinensteuerung ein einstellbarer Abschaitdruckwert P_{ab} hinterlegt ist und
- bei Erreichen eines voreingestellten Abschaltdruckes P_{ab} die Komponentenzufuhr abschaltbar und der Mischkopf in den Rezirkulationszustand umschaltbar ist.

## Claims

1. Method for the production of structural parts with a compact polyurethane sealing layer, wherein the structural part is placed into a moulding tool (20), in which in the closed state a gap (23) is present between the surface of the structural part (1) which is to be coated and the inner wall of the mould lying opposite thereto, wherein the mixing head for filling the gap is connected to the moulding tool (20) and the components of the compact polyurethane are injected via a mixing head (13) and a runner (24, 25) into the moulding tool (20) which is equipped with the structural part (1),
**characterized in that**
a pressure Pᵢₛₜ, dependent on a cavity pressure, in the component supply to the mixing head (13), is determined in the runner to the moulding tool or in an overflow space (26), and
the component supply is terminated and the mixing head is switched over into a recirculation state when the determined pressure Pᵢₛₜ has reached a predefinable pressure P_{ab}.

2. Method according to Claim 1,
**characterized in that**
with the measurement in the component supply, the pressure of one of the components is measured.

3. Method according to Claim 1 or 2,
**characterized in that**
with a mixing ratio which is not equal to 1:1, the pressure of the component is measured which has the higher proportion in the polyurethane mixture.

4. Method according to Claim 1,
**characterized in that**
with the measurement in the component supply, the pressure of both components is measured.

5. Method according to one of Claims 1 to 4,
**characterized in that**
the pressure is measured additionally both in the runner (24, 25) and also in the overflow space (26), that a mean value of these two pressure values is formed and that the cutting off of the component supply takes place on reaching a predefined mean value.

6. Method according to one of Claims 1 to 5,
**characterized in that**
in addition, the time t after the start of the supply of mixture is measured, and that the component supply is cut off when a particular, predefinable time T_{ab} has elapsed.

7. Device for carrying one of the methods named in Claims 1 to 6 for the production of structural parts with a compact polyurethane sealing layer, comprising a mixing head (13) for producing a polyurethane mixture, which is able to be introduced via a runner (25, 25) into a moulding tool (20), and two component supply lines (9, 10) to the mixing head (13), wherein
- the mixing head (13)for filling the moulding tool (20) is able to be connected thereto,
- in one or in both of the component supply lines (9, 10) or in the runner or in an overflow space (26) of the moulding tool, a pressure sensor (16, 17) is provided,
- an adjustable cut-off pressure value P_{ab} is deposited in a machine control system and
- on reaching a pre-set cut-off pressure P_{ab}, the component supply is able to be cut off and the mixing head is able to be switched over into the recirculation state.

## Revendications

1. Procédé de production de pièces présentant une couche de revêtement polyuréthane compacte, sachant que la pièce est placée dans un outil de moule (20) dans lequel en l'état fermé, une fente (23) est présente entre la surface à revêtir de la pièce (1) et la paroi intérieure du moule qui lui fait face, sachant que la tête mélangeuse pour remplir la fente est raccordée à l'outil de moule (20) et que les composants du polyuréthane compact sont injectés par une tête mélangeuse (13) et un canal d'injection (24, 25) dans l'outil de moule (20) muni de la pièce (1),
**caractérisé en ce qu'**une pression Pᵢₛₜ fonction d'une pression de cavité est calculée dans l'alimentation en composant vers la tête mélangeuse (13), dans le canal d'injection vers l'outil de moule ou dans un espace de trop-plein (26), et
que l'alimentation en composant est arrêtée et que la tête mélangeuse passe à un mode de recirculation, lorsque la pression Pᵢₛₜ calculée a atteint une pression P_{ab} prédéfinissable.

2. Procédé selon la revendication 1, **caractérisé en ce que** lors de la mesure dans l'alimentation en composant, la pression d'un des composants est mesurée.

3. Procédé selon la revendication 1 ou 2, **caractérisé en ce qu'**avec un rapport de mélange inégal à 1:1, la pression de chaque composant qui possède la part la plus élevée de mélange de polyuréthane est mesurée.

4. Procédé selon la revendication 1, **caractérisé en ce que** lors de la mesure dans l'alimentation en composant, la pression des deux composants est mesurée.

5. Procédé selon l'une des revendications 1 à 4, **caractérisé en ce que** la pression est mesurée tant dans le canal d'injection (24, 25) que dans l'espace de trop-plein (26), qu'une valeur moyenne de ces deux valeurs de pression est formée et que l'arrêt de l'alimentation en composant s'effectue lorsqu'une valeur moyenne prédéfinie est atteinte.

6. Procédé selon l'une des revendications 1 à 5, **caractérisé en ce qu'**en plus le temps t après le départ de l'amenée du mélange est mesuré et que l'alimentation en composant est arrêtée lorsqu'un temps précis T_{ab} prédéfinissable est passé.

7. Dispositif pour exécuter un procédé nommé dans les revendications 1 à 6 de production de pièces présentant une couche de revêtement polyuréthane compacte, comprenant une tête mélangeuse (13) pour produire un mélange de polyuréthane qui peut être amené par un canal d'injection (25, 25) dans un outil de moule (20), et deux alimentations en composant (9, 10) vers la tête mélangeuse (13), sachant que
- la tête mélangeuse (13) peut être raccordée à l'outil de moule (20) pour remplir celui-ci,
- dans l'une des alimentations en composant (9, 10) ou dans les deux, ou dans le canal d'injection ou dans un espace de trop-plein (26) de l'outil de moule, un détecteur de pression (16, 17) est prévu,
- dans une commande de machine, une valeur de pression d'arrêt P_{ab} réglable est consignée et
- lorsque une pression d'arrêt préréglée P_{ab} est atteinte, l'alimentation en composant peut-être arrêtée et la tête mélangeuse peut passer au mode de recirculation.
